# EUROPÄISCHE PATENTSCHRIFT

(11) **EP 1 482 633 B1**
(45) Veröffentlichungstag und Bekanntmachung des Hinweises auf die Patenterteilung: **21.12.2016**
(21) Anmeldenummer: 04012384.6
(22) Anmeldetag: 26.05.2004
(51) Int. Cl.: B66C 13/26, H02P 23/24, H02P 7/00

(54) **Schnittstellenschaltung für die Ansteuerung eines elektrischen Verbrauchers und Schaltungsanordnung für die Ansteuerung eines Elektromotors hiermit**
Interface circuit for the control of an electric user and controlcircuit to control an electric motor with it
Circuit d'interface d'un appareil électrique et circuit pour commander un moteur électrique avec celui-ci

(30) Priorität: 30.05.2003 DE 10324881
(43) Veröffentlichungstag der Anmeldung: 01.12.2004
(73) Patentinhaber: Terex MHPS GmbH, 40597 Düsseldorf (DE)
(72) Erfinder: Freitag, Holger, 44894 Bochum (DE); Münzebrock, Anton, 44139 Dortmund (DE); Hasenack, Burkhard, 58099 Hagen (DE); Persico, Guilliano, 58300 Wetter (DE); Appel, Erik, 58300 Wetter (DE)
(74) Vertreter: Moser Götze & Partner Patentanwälte mbB

(56) Entgegenhaltungen:
- EP-A- 0 575 045
- BE-A- 420 340
- DE-U- 9 405 631
- US-A- 3 971 971

## Beschreibung

Die Erfindung betrifft eine Schnittstellenschaltung für die Ansteuerung einer Motorsteuerung eines Elektromotors, insbesondere eines polumschaltbaren Drehstromasynchronmotors eines Hubwerks, mit einem einer ein Wechselspannungssignal führenden Signalleitung zugeordneten ersten schaltbarem Kontaktelement zur Erzeugung mindestens zweier voneinander verschiedener Steuersignale. Auch betrifft die Erfindung eine Schaltungsanordnung für die Ansteuerung einer Motorsteuerung eines Elektromotors, insbesondere eines polumschaltbaren Drehstromasynchronmotors eines Hubwerks, mit einem eine vorgenannte Schnittstellenschaltung aufweisenden Steuerschaltelement, das über eine Signalleitung mit der Motorsteuerung des Elektromotors verbunden ist.

Es ist allgemein bekannt, Steuersignale zwischen einem Steuerschalter und einem Elektromotor über eine Signalleitung zu übertragen. Jedem Leitungsdraht ist hierbei, ein zu übertragendes Steuersignal zugeordnet. Das Steuersignal ist durch das Vorhandensein einer Spannung oder das Nichtvorhandensein einer Spannung auf der Signalleitung gekennzeichnet. Einer dieser beiden Signalzustände kann dann Funktionen wie beispielsweise "Elektromotor dreht im Uhrzeigersinn" bewirken.

Im Falle von zu steuernden polumschaltbaren Drehstrommotoren bewirken die einzelnen Steuersignale in Kombination miteinander beispielsweise die Funktionen: "Linksdrehen langsam", "Rechtsdrehen langsam", "Linksdrehen schnell" und "Rechtsdrehen schnell". Dabei werden in üblicher Weise drei Steuersignale wie beispielsweise "rechts", "links" und "schnell" von einem Steuerschalter erzeugt. Sollte auf der Steuerleitung für das Steuersignal "schnell" keine Spannung anstehen, wird der Drehstrommotor in der über das weitere Steuersignal anstehenden Drehrichtung langsam drehen. Sind mehrere Achsen einer Vorrichtung mit entsprechenden polumschaltbaren Drehstrommotoren motorisch betrieben, müssen vom Steuerschalter entsprechend der Achsenanzahl weitere Steuersignale erzeugt werden. Für eine dreiachsige Vorrichtung, wie beispielsweise einen Hallenlaufkran, bei dem das Hubwerk, die Hubwerkskatze und die Krantraverse über polumschaltbare Drehstrommotoren angetrieben sind, sind neun Signale und somit auch neun Signalleitungen zuzüglich einer Bezugspotential-Leitung erforderlich. Mit diesem System gehen somit auf Grund der hohen Signalleitungsanzahl hohe Kosten und ein hoher Verdrahtungsaufwand einher.

Ein übliches Verfahren zur Verringerung der erforderlichen Anzahl der Signalleitungen bei Beibehaltung der Informationsmenge in Form der verschiedenen Steuersignale, ist die Umwandlung der parallelen Signale in serielle Informationen. Im Stand der Technik sind viele serielle Übertragungsarten bekannt, von der in der PC-Technik bekannten RS232-Schnittstelle bis hin zu Bussystemen, welche die Steuersignale sehr schnell und sicher übertragen können. Die Umwandlung der parallelen Steuersignale in serielle Informationen und deren Rückumwandlung für den dann erfolgenden Steuervorgang ist jedoch kostenintensiv. Auch ist eine Fehlerdiagnose bei der seriellen Übertragung von Steuersignalen schwieriger als bei parallelen Signalleitungen.

Aus der britischen Patentschrift GB 1 411 949 ist bereits eine Anordnung bekannt, mit der die Leistungsaufnahme einer Last aus einer Wechselstromquelle gesteuert wird. Als Anwendungsgebiete werden das Dimmen von Glühlampen, das Reduzieren der Wärmeabgabe von Elektroöfen und das Reduzieren der Drehzahl von Bohrern genannt. Die Anordnung besteht aus einem beweglichen elektrischen Schaltarm mit drei Schaltstellungen, der einen ersten Pol der Wechselstromquelle wählbar mit einem von drei Ausgangskontakten verbindet, einem Gleichrichter und einem Kondensator. Die Last ist mit dem zweiten Pol der Wechselstromquelle direkt verbunden. Durch die drei Stellungen des Schaltarms wird ein unterschiedlicher Leistungsfluss zwischen der Wechselstromquelle und der Last erzeugt. In der neutralen Stellung, im der der zweite Ausgangskontakt geschaltet ist, ist die Last von der Wechselstromquelle getrennt. Dann fließt keine Leistung. In der ersten Stellung, in der der erste Ausgangskontakt geschaltet ist, ist die Wechselstromquelle über den Gleichrichter mit der Last und dem parallel zur Last angeordneten Kondensator verbunden, so dass elektrischer Strom aus der Wechselstromquelle nur während einer Halbwelle der Wechselspannung fließen kann. Dieser Strom wird von dem Kondensator und der Last aufgenommen. Dabei lädt sich der Kondensator auf und gibt die Ladung bei gesperrtem Gleichrichter in der Strompause an die Last ab. In der dritten Stellung, in der der dritte Ausgangskontakt geschaltet ist, arbeitet der Schaltarm als Leistungsschalter und verbindet die Wechselstromquelle direkt mit der Last. Aus der neutralen Mittelstellung des Schaltarms sind so zwei Schaltstellungen beabsichtigter unterschiedlicher Leistungsaufnahme durch die Last anwählbar.

Hiervon ausgehend liegt der vorliegenden Erfindung die Aufgabe zu Grunde, eine Schnittstellenschaltung und eine Schaltungsanordnung für die Ansteuerung eines Elektromotors hiermit zu schaffen, die eine Verringerung der gegenüber einer Parallel-Übertragung erforderlichen Anzahl von Signalleitungen bei gleichzeitiger Erhaltung der einfachen Fehlerdiagnose ermöglicht.

Diese Aufgabe wird durch eine Schnittstellenschaltung mit den Merkmalen des Anspruchs 1 und eine Schaltungsanordnung für die Ansteuerung eines Elektromotors mit den Merkmalen des Anspruchs 4 gelöst.

Erfindungsgemäß wird bei einer Schnittstellenschaltung für die Ansteuerung einer Motorsteuerung eines Elektromotors, insbesondere eines polumschaltbaren Drehstromasynchronmotors eines Hubwerks, mit einem einer ein Wechselspannungssignal führenden Signalleitung zugeordneten ersten schaltbarem Kontaktelement zur Erzeugung mindestens zweier voneinander verschiedener Steuersignale, eine besonders einfache Schaltung, wobei dem ersten schaltbarem Kontaktelement in der Signalleitung eine Codier-Diode in Reihe vor- oder nachgeschaltet ist, dadurch erreicht, dass parallel zu der Codier-Diode ein weiteres zweites schaltbares Kontaktelement angeordnet ist, so dass in Abhängigkeit der Stellungen des ersten schaltbarem Kontaktelements und des zweiten schaltbarem Kontaktelements drei voneinander verschiedene Steuersignale erzeugbar sind, dass ein geöffnetes erstes schaltbares Kontaktelement und ein geöffnetes zweites schaltbares Kontaktelement als Steuersignal ein "AUS"-Signal erzeugen, ein geschlossenes erstes schaltbares Kontaktelement und ein geöffnetes zweites schaltbares Kontaktelement als Steuersignal ein "HALB"-Signal in Form der Weiterleitung einer Halbwelle des Wechselspannungssignals auf der Signalleitung erzeugen sowie ein geschlossenes erstes schaltbares Kontaktelement und ein geschlossenes zweites schaltbares Kontaktelement als Steuersignal ein "EIN"-Signal in Form der Weiterleitung eines vollen Wechselspannungssignals auf die Signalleitung erzeugen und der Elektromotor als polumschaltbarer Drehstromasynchronmotor ausgebildet ist. Hierdurch werden zur Ansteuerung eines polumschaltbaren Drehstrommotors nur eine einfache Diode und ein weiteres Schaltelement mit mehreren Kontaktelementen benötigt. Damit kann nun eine einzige Signalleitung nicht nur die Information "EIN" oder "AUS" übermitteln, sondern können drei Zustände wie "EIN", "HALB" oder "AUS" übertragen werden. Pro polumschaltbaren Drehstrommotor kann somit eine Signalleitung eingespart werden, was zu einer Reduzierung des Material- und Verdrahtungsaufwandes um ein Drittel führt. Die Fehlerdiagnose kann, wie im Falle der Parallelübertragung mit einem einfachen Spannungsmesser stattfinden.

In einer besonderen Ausgestalltung ist dann einer Codier-Diode ein erster Taster für die Funktion Linkslauf mit einem ersten schaltbarem Kontaktelement, ein zweiter Taster für die Funktion Rechtslauf mit einem ersten schaltbarem Kontaktelement zugeordnet sowie dem ersten Taster und dem zweiten ein gemeinsames schaltbares Folgeschließkontaktelement für die Funktion Schnelllauf. Hierdurch kann ein Kontaktelement eingespart werden. Das erste schaltbare Kontaktelement ist dann mit einer ersten Ader der Signalleitung und das zweite schaltbare Kontaktelement dann mit einer zweiten Ader der Signalleitung verbunden.

Bei dieser Schnittstellenschaltung kann dem ersten und zweiten schaltbarem Kontaktelementen ohne zusätzlichen Leitungsaufwand einfach ein NOT-HALT-Schalter vorgeschaltet werden.

Auch ist diese Schnittstellenschaltung geeignet in einer Schaltungsanordnung für die Ansteuerung einer Motorsteuerung eines Elektromotors, insbesondere eines polumschaltbaren Drehstromasynchronmotors, Anwendung zu finden. Die Schnittstellenschaltung ist dann in einem Steuerschaltelement integriert, das über eine Signalleitung mit der Motorsteuerung des Elektromotors verbunden ist. Die Motorsteuerung ist hierbei in einen Motorschalter und einen Signaldecoder aufgeteilt. Der Motorschalter ist mit dem Elektromotor zu dessen Ansteuerung verbunden und der Signaldecoder bereitet die von der Schnittstellenschaltung über die Signalleitung ankommenden Signale zur Weiterleitung an den Motorschalter auf.

Nachfolgend wird die erfindungsgemäße Schnittstellenschaltung und die Ansteuerschaltung an Hand zweier zeichnerisch dargestellter Ausführungsbeispiele näher erläutert. Es zeigen:
- Figur 1: eine schematische Darstellung eines Anwendungsbeispiels für eine erfindungsgemäße Schnittstellenschaltung,
- Figur 2: ein Schaltbild der erfindungsgemäßen Schnittstellenschaltung,
- Figur 3: eine schematische Darstellung der von der erfindungsgemäßen Schnittstellenschaltung generierten drei unterschiedlichen Steuersignale,
- Figur 4: ein Schaltbild einer ersten Ausführungsform der erfindungsgemäßen Schnittstellenschaltung und
- Figur 5: ein Schaltbild einer zweiten Ausführungsform der erfindungsgemäßen Schnittstellenschaltung.

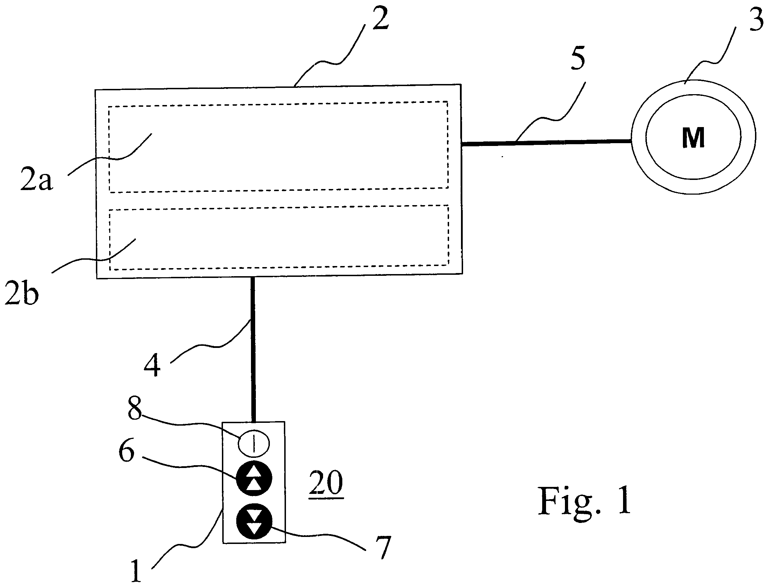

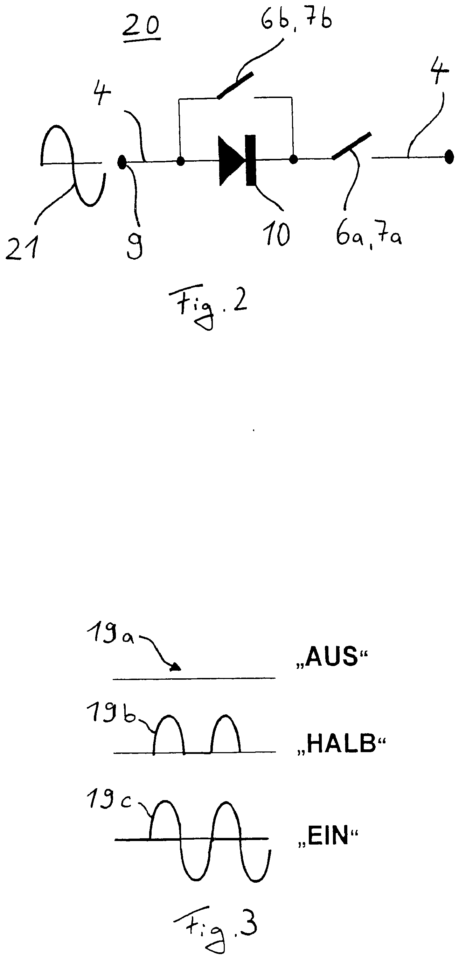

In der Figur 1 ist ein Anwendungsbeispiel für eine erfindungsgemäße Schnittstellenschaltung 20 zur Ansteuerung eines Elektromotors 3 eines Hubwerks dargestellt. Gezeigt sind im Wesentlichen ein Steuerschaltelement 1, eine Motorsteuerung 2 und ein als polumschaltbarer Drehstromasynchronmotor ausgebildeter Elektromotors 3, der das nicht dargestellte Hubwerk mit zwei entgegengesetzten Drehrichtungen (Heben und Senken) und zwei Geschwindigkeiten antreiben kann. Die Motorsteuerung 2 enthält einen Motorschalter 2a für die Steuerung des Elektromotors 3 und einen Signaldecoder 2b für die Auswertung der Steuersignale 19a, 19b, 19c von dem Steuerschaltelement 1 (siehe Figur 3). Das Steuerschaltelement 1 ist über eine Signalleitung 4 mit der Motorsteuerung 2 verbunden, die ihrerseits über eine Motorleitung 5 mit dem Elektromotor 3, insbesondere den nicht dargestellten Ständerwicklungen des Drehstromasynchronmotors, verbunden ist.

Das Steuerschaltelement 1 weist mehrere manuell betätigbare Schaltelemente auf, die in Form eines rastenden Schalters 8 für die "NOT-HALT"-Funktion, eines ersten zweistufigen selbstrückstellenden Tasters 6 für die Drehrichtung "LINKS" sowie eines zweiten gleichartigen Tasters 7 für die Drehrichtung "RECHTS" ausgebildet sind. Mit den Tastern 6, 7 steuert eine Bedienungsperson wahlweise die Drehrichtung "LINKS" oder "RECHTS" des Elektromotors 3 und mit der zweiten Stufe des jeweiligen Tasters 6, 7 die schnelle Geschwindigkeit des Elektromotors 3.

In der Figur 2 ist die erfindungsgemäße Schnittstellenschaltung 20 für einen der Taster 6 oder 7 als Schaltbild dargestellt, die im Wesentlichen aus einer Codier-Diode 10 und zwei schaltbaren Kontaktelementen 6a, 7a und 6b, 7b der Taster 6, 7 besteht. Die Codier-Diode 10 ist im Verlauf der Signalleitung 4 angeordnet, die zur Motorsteuerung 2 des Elektromotors 3 führt. An der Signalleitung 4 steht ein Wechselspannungssignal 21 an, das von der Schnittstellenschaltung 20 in drei voneinander verschiedene Steuersignale 19a, 19b und 19c umgewandelt werden kann. Diese Steuersignale 19a, 19b und 19c bewirken dann am Elektromotor 3 die gewünschten Funktionen "LINKSLAUF", "RECHTSLAUF", "LANGSAM" und/oder "SCHNELL". Zur Auswertung der Steuersignale 19a, 19b und 19c ist im Bereich des Elektromotors 3 der Signaldecoder 2b vorgesehen.

Zur Erzeugung der Steuersignale 19a, 19b und 19c ist das erste Kontaktelement 6a beziehungsweise 7a der Decodier-Diode 10 in Reihe nachgeschaltet und das zweite Kontaktelement 6b beziehungsweise 7b ist zu der Decodier-Diode 10 parallel geschaltet. Die beiden Kontaktelemente 6a, 7a und 6b, 7b können beispielsweise in einem Taster 6, 7 integriert sein, der als Mehrstufenschalter ausgebildet ist. Die Kontaktelemente 6b, 7b sind dann in entsprechender Weise als Folgeschließkontaktelemente ausgebildet.

Die von der erfindungsgemäßen Schnittstellenschaltung 20 erzeugbaren Steuersignale 19a, 19b und 19c sind in der Figur 3 dargestellt. Das erste mit "AUS" bezeichnete Steuersignal 19a wird erzeugt, wenn das erste und das zweite Kontaktelement 6a, 7a und 6b, 7b geöffnet sind. Auf der Signalleitung 4 wird somit kein Wechselspannungssignal 6 in Richtung der Motorsteuerung 2 übertragen. Eine Erzeugung des zweiten Steuersignals 19b "HALB" wird erreicht, wenn das zweite Kontaktelement 6b, 7b geöffnet und das erste Kontaktelement 6a, 7a geschlossen ist. Das Wechselspannungssignal 21 läuft somit durch die Decodier-Diode 10 und dessen untere Halbwelle wird abgeschnitten. Wird nun auch das zweite Kontaktelement 6b, 7b geschlossen, wird das Wechselspannungssignal 21 an der Decodier-Diode 10 vorbeigeführt und das Wechselspannungssignal 21 erreicht als Steuersignal 19c "EIN" vollständig die Motorsteuerung 2.

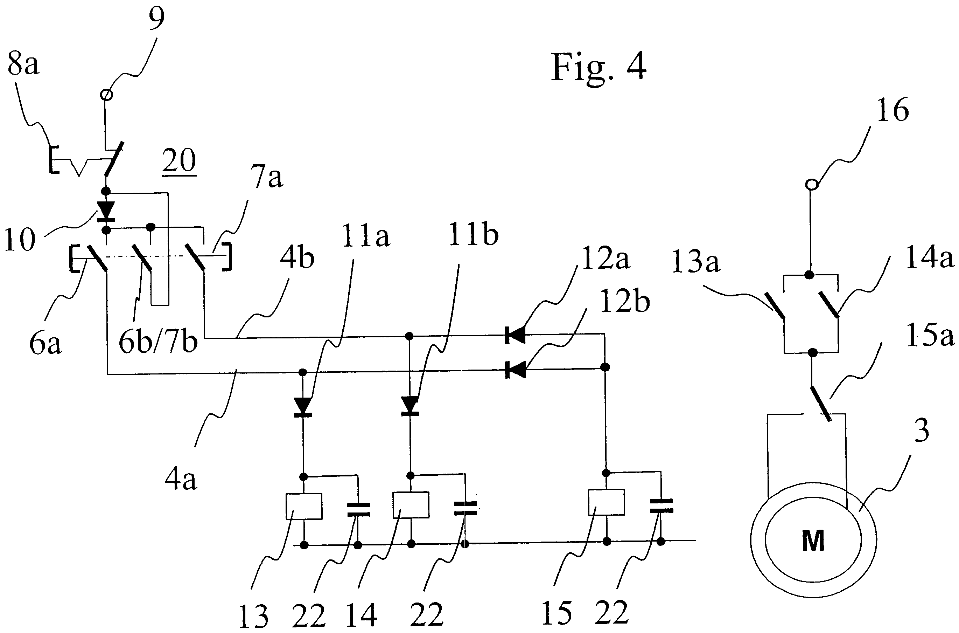

Die Figur 4 stellt ein Schaltbild einer ersten Ausführungsform der erfindungsgemäßen Schnittstellenschaltung für die in Figur 1 dargestellte Anwendung dar. Die Elemente mit den Bezugszeichen 6 bis 10 symbolisieren die Funktionen des Steuerschaltelements 1; die Elemente mit den Bezugszeichen 11 und 12 erfüllen die Funktion der Signaldekodierung und die Elemente mit den Bezugszeichen 13 bis 15 die Funktion des Motorschalters 2.

Dem Steuerschaltelement 1 wird die Signalspannung - zum Beispiel 24 V Wechselspannung 21 (siehe Figur 2) - am Anschluss 9 zugeführt. Mit dem Öffnerkontakt 8a des "NOT-HALT"-Schalters 8 kann der Bediener im Notfall die Spannungsversorgung des Steuerschaltelement 1 unterbrechen, so dass alle Signalausgaben verhindert sind.

Das erfindungsgemäße Schnittstellensignal wird wie im Zusammenhang mit Figur 2 bereits grundsätzlich erläutert durch das Zusammenwirken des Kontaktelements 6a für "LINKSLAUF" und des Kontaktelements 7a für "RECHTSLAUF" sowie des gemeinsamen Folgeschließers 6/7b, der von beiden Tastelementen 6 und 7 betätigt werden kann, mit der Codier-Diode 10 erreicht.

Beim Durchdrücken des Tasters 6 wird zunächst das Kontaktelement 6a geschlossen und gibt somit die an 9 anliegende Wechselspannung 21 über die Codier-Diode 10 und den geschlossenen Kontakt 6a, der anschließenden ersten Ader 4a der Signalleitung 4 sowie die vierte Decodier-Diode 12b an die Relaisspule 15 für die Geschwindigkeitsstufen und über die erste Decodier-Diode 11 a an die Relaisspule 13 für Linkslauf weiter. Auf Grund der entgegengesetzt gerichteten Polung der Codier-Diode 10 zu der vierten Decodier-Diode 12b kann die Relaisspule 15 nicht anziehen, da kein Stromfluss möglich ist. Die Codier-Diode 10 und die erste 11 a sind gleichsinnig gepolt, so dass die Relaisspule 13 für Linkslauf während der positiven Spannungshalbwelle der Signalspannung 21 bestromt wird. Dadurch zieht die Relaisspule 13 für Linkslauf an und der zugehörige 3-polige Kontaktsatz 13a wird geschlossen, so dass der Motor 3 über den Ruhekontakt 15a der weiteren Relaisspule 15 für die Geschwindigkeitsstufe "SCHNELL" oder "LANGSAM" mit dem Drehstrom-Netzanschluss 16 verbunden ist. Der Ruhekontakt 15a verbindet vorzugsweise die Motorwicklung für die niedrige Geschwindigkeit mit dem Drehstromnetz. In diesem Schaltzustand wird die negative Halbwelle der Signalspannung durch die Codier-Diode 10 gesperrt, die Relaisspule 13 wird jedoch weiterhin mit Strom aus dem sich entladenden, parallel geschalteten Kondensator 22 versorgt, so dass der Kontakt 13a geschlossen bleibt. Die Phasenfolge des Kontaktsatzes 13a ist so geschaltet, dass sich der "LINKSLAUF" des Drehstromasynchronmotors 3 einstellt.

Wenn der erste Taster 6 weiter durchgedrückt wird, wird die zweite Schaltstufe das Folgeschließkontaktelement 6/7b geschlossen, so dass die Codier-Diode 10 überbrückt ist. Dadurch werden jetzt beide Halbwellen der Signalwechselspannung 21 durch den ersten Taster 6 geschaltet, so dass sowohl die Relaisspule 13 für den Linkslauf als auch die Relaisspule 15 für die Geschwindigkeitsstufe, die während der negativen Halbwelle der Signalspannung 21 gespeist wird, mit Strom versorgt werden. Dies bedeutet, dass der 3-polige Kontaktsatz 13a weiter geschlossen bleibt und der 3-polige Kontaktsatz 15a in die Arbeitsstellung umschaltet, so dass die Wicklung für die schnelle Geschwindigkeit des Drehstromasynchronmotors 3 erregt wird. Dadurch wird erreicht, dass der Motor 3 in den Zuständen "LINKSLAUF" und "SCHNELL" arbeitet.

Für die Ansteuerung des Zustandes "RECHTSLAUF" des Motors 3 wird analog zum vorher beschriebenen Betätigungsablauf für den Taster 6 der Taster 7 betätigt, so dass in der ersten Schaltstufe das Kontaktelement 7a über die anschließende zweite Ader 4b der Signalleitung 4, die zweite Decodier-Diode 11 b das Relais 14 für Rechtslauf mit dem 3-poligen Kontaktsatz 14a, der die Phasenfolge für den "Rechtslauf` schaltet, steuert. Bei weiterem Durchdrücken des Tasters 7 wird das Folgeschließkontaktelement 6/7b geschlossen, so dass wiederum zusätzlich die Relaisspule 15 für die Geschwindigkeitsstufe über die dritte Decodier-Diode 12a den Kontaktsatz 15a in die Stellung für die schnelle Geschwindigkeit umschaltet.

In der Figur 4 ist somit dargestellt, wie ein Drehstromasynchronmotor 3 mit zwei Laufrichtungen "LINKSLAUF" oder "RECHTSLAUF" und zwei Geschwindigkeiten "SCHNELL" oder "LANGSAM" durch die erfindungsgemäße Signalschnittstelle 20 leitungssparend mit nur zwei Signaladern 4a und 4b einer Signalleitung 4 und einer nicht dargestellten Ader für die Einspeisung der Signalspannungsversorgung zwischen Steuerschaltelement 1 und Motorsteuerung 2 gesteuert werden kann, wobei die in vielen Anwendungen notwendige "NOT-HALT"-Funktion ohne zusätzlichen Leitungsaufwand integrierbar ist.

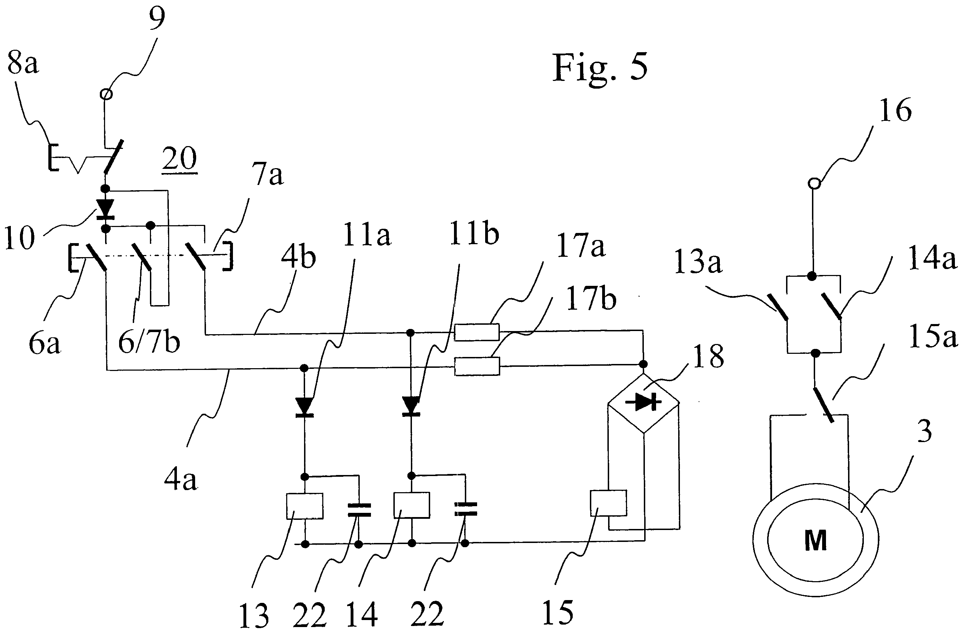

In der Figur 5 ist eine alternative Ausführungsform der Schnittstellenschaltung 20 nach Figur 4 dargestellt. Dabei wird die Relaisspule 15 für die Geschwindigkeitsstufen, während das Folgeschließkontaktelement 6/7b geschlossen ist, durch die mittels der Gleichrichterbrücke 18 gleichgerichtete Wechselspannung erregt, wobei der Kontaktsatz 15a aus der Ruhestellung in die Arbeitsstellung umgeschaltet wird, also der Wechsel zwischen "langsamer" und "schneller" Geschwindigkeit erfolgt. Der Spannungsabfall an den jeweils in der ersten und zweiten Ader 4a und 4b der Signalleitung angeordneten Widerständen 17a und 17b verhindert, dass in dem Schaltzustand, in dem nur eine Halbwelle der Signalwechselspannung 21 durchgeschaltet ist, dass heißt in der Kontaktstellung "langsame" Geschwindigkeit, die Anzugsspannung der Relaisspule 15 erreicht wird. Gleichzeitig wird mit dem Spannungsabfall an diesen Widerständen 17a und 17b verhindert, dass eine Rückkoppelung zwischen den Relaisspulen 13 und 14 erfolgt. Beispielsweise für den Fall, wenn das Kontaktelement 6a geschlossen ist und die Relaisspule 13 für Linkslauf gespeist wird, verhindert der Spannungsabfall an den Widerständen 17b und 17a, dass gleichzeitig über den Weg 17b, 17a, 11b die Relaisspule 14 mit einer ausreichenden Anzugsspannung versorgt wird.

In weiterer Ausgestaltung der erfindungsgemäßen Anwendung kann in an sich bekannter Weise durch mechanische Verriegelung oder mit zusätzlichen Kontakten verhindert werden, dass durch gleichzeitige Betätigung der Taster 6 und 7 die Kontakte 13a und 14a gleichzeitig geschlossen werden, was zum Kurzschluss zweier Netzphasen führen würde.

Durch Anwendung der erfindungsgemäßen Schnittstellenschaltung 20 werden für die Signalleitung 4 im dargestellten Fall nur zwei Adern 4a, 4b für die Signalübertragung und eine nicht dargestellte Ader für die Versorgung mit der Signalspannung benötigt.

Es sind auch Ausführungen möglich, bei denen der Signaldecoder 2b in der Motorsteuerung 2 nicht durch entsprechend geschaltete Dioden erfolgt, wie in den Figuren 4 und 5 dargestellt und beschrieben, sondern durch Auswertung der mittels der Leitungen 4a und 4b übertragenen Signale in einem Mikroprozessor. In diesem Falle wird der Mikroprozessor mit seinen Ausgängen die Relaisspulen 13, 14 und 15 in der gewünschten Weise mittels Halbleiterschalter mit Strom versorgen, so dass die Relaiskontakte 13a, 14a und 15a - wie bereits beschrieben - den Motor mit dem Drehstromnetz verbinden.

**Bezugszeichenliste**

| | | | |
|---|---|---|---|
| 1 | Steuerschaltelement | 10 | Codier-Diode |
| 2 | Motorsteuerung | 11a | erste Decodier-Diode |
| 2a | Motorschalter | 11b | zweite Decodier-Diode |
| 2b | Signaldecoder | 12a | dritte Decodier-Diode |
| 3 | Elektromotor | 12b | vierte Decodier-Diode |
| 4 | Signalleitung | 13 | Relaisspule für Linkslauf |
| 4a | erste Ader der Signalleitung 4 | 13a | 3-poliger Kontaktsatz |
| | | 14 | Relaisspule für Rechtslauf |
| 4b | zweite Ader der Signalleitung 4 | 14a | 3-poliger Kontaktsatz |
| | | 15 | Relaisspule für Geschwindigkeitsstufen |
| 5 | Motorleitung | | |
| 6 | erster Taster für Linkslauf | 15a | 3-poliger Kontaktsatz |
| 6a | Kontaktelement des ersten Tasters 6 | 16 | Netzanschluss |
| | | 17a | erster Widerstand |
| 6b | Folgeschließkontaktelement des ersten Tasters 6 | 17b | zweiter Widerstand |
| | | 18 | Gleichrichterbrücke |
| 7 | zweiter Taster für Rechtslauf | 19a | Steuersignal "AUS" |
| 7a | Kontaktelement des zweiten Tasters 7 | 19b | Steuersignal "HALB" |
| | | 19c | Steuersignal "EIN" |
| 7b | Folgeschließkontaktelement des zweiten Tasters 7 | 20 | Schnittstellenschaltung |
| | | 21 | Wechselspannungssignal |
| 8 | NOT-HALT-Schalter | 22 | Kondensator |
| 8a | Öffnerkontakt des Schalters 8 | | |
| 9 | Anschluss | | |

## Patentansprüche

1. Schnittstellenschaltung für die Ansteuerung einer Motorsteuerung (2) eines Elektromotors, insbesondere eines polumschaltbaren Drehstromasynchronmotors eines Hubwerks, mit einem einer ein Wechselspannungssignal führenden Signalleitung (4) zugeordneten ersten schaltbarem Kontaktelement (6a, 7a) zur Erzeugung mindestens zweier voneinander verschiedener Steuersignale, wobei dem ersten schaltbarem Kontaktelement (6a, 7a) in der Signalleitung (4) eine Codier-Diode (10) in Reihe vor- oder nachgeschaltet ist, **dadurch gekennzeichnet, dass** parallel zu der Codier-Diode (2) ein weiteres zweites schaltbares Kontaktelement (6b, 7b) angeordnet ist, so dass in Abhängigkeit der Stellungen des ersten schaltbaren Kontaktelements (6a, 7a) und des zweiten schaltbaren Kontaktelements (6b, 7b) drei voneinander verschiedene Steuersignale (19a, 19b, 19c) erzeugbar sind, dass ein geöffnetes erstes schaltbares Kontaktelement (6a, 7a) und ein geöffnetes zweites schaltbares Kontaktelement (6b, 7b) als Steuersignal ein "AUS"-Signal (19a) erzeugen, ein geschlossenes erstes schaltbares Kontaktelement (6a, 7a) und ein geöffnetes zweites schaltbares Kontaktelement (6b, 7b) als Steuersignal ein "HALB"-Signal (19a) in Form der Weiterleitung einer Halbwelle des Wechselspannungssignals (21) auf der Signalleitung (4) erzeugen sowie ein geschlossenes erstes schaltbares Kontaktelement (6a, 7a), ein geschlossenes zweites schaltbares Kontaktelement (6b, 7b) als Steuersignal ein "EIN"-Signal (19a) in Form der Weiterleitung eines vollen Wechselspannungssignals (21) auf die Signalleitung (4) erzeugen und der Elektromotor als polumschaltbarer Drehstromasynchronmotor (3) ausgebildet ist.

2. Schnittstellenschaltung nach Anspruch 1, **dadurch gekennzeichnet, dass** einer Codier-Diode (10) ein erster Taster (6) für die Funktion Linkslauf mit einem ersten schaltbarem Kontaktelement (6a), ein zweiter Taster (7) für die Funktion Rechtslauf mit einem ersten schaltbarem Kontaktelement (7a) sowie dem ersten Taster (6) und dem zweiten ein gemeinsames schaltbares Folgeschließkontaktelement (6b, 7b) für die Funktion Schnelllauf zugeordnet sind und das erste schaltbare Kontaktelement (6a) einer ersten Ader (4a) der Signalleitung (4) und das zweite schaltbare Kontaktelement (6a) einer zweiten Ader (4a) der Signalleitung (4) zugeordnet sind.

3. Schnittstellenschaltung nach Anspruch 1 oder 2, **dadurch gekennzeichnet, dass** den ersten und zweiten schaltbaren Kontaktelementen (6a, 7a, 6b, 7b) ein NOT-HALT-Schalter (8) vorgeschaltet ist.

4. Schaltungsanordnung für die Ansteuerung einer Motorsteuerung (2) eines Elektromotors, insbesondere eines polumschaltbaren Drehstromasynchronmotors eines Hubwerks, mit einem eine Schnittstellenschaltung nach einem der Ansprüche 1 bis 3 aufweisenden Steuerschaltelement, das über eine Signalleitung mit der Motorsteuerung (2) des Elektromotors verbunden ist, **dadurch gekennzeichnet, dass** die Motorsteuerung (2) in einen Motorschalter (2b) und einen Signaldecoder (2b) aufgeteilt ist, der Motorschalter (2b) mit dem Elektromotor (3) zu dessen Ansteuerung verbunden ist, und der Signaldecoder (2b) die von der Schnittstellenschaltung (20) über die Signalleitung (4) ankommenden Signale (19a, 19b und 19c) zur Weiterleitung an den Motorschalter (2a) aufbereitet.

## Claims

1. Interface circuit for operating a motor control system (2) for an electric motor, and in particular for an asynchronous three-phase pole-changing motor of a hoisting unit, having a first switchable contact element (6a, 7a) for generating at least two mutually differing control signals, which first switchable contact element (6a, 7a) is associated with a signal line (4) carrying an AC voltage signal, the first switchable contact element (6a, 7a) having connected in series with it in the signal line (4), either upstream or downstream, an encoding diode (10), **characterised in that** a further, second, switchable contact element (6b, 7b) is arranged in parallel with the encoding diode (2), thus enabling three mutually differing control signals (19a, 19b, 19c) to be generated as a function of the positions of the first switchable contact element (6a, 7a) and the second switchable contact element (6b, 7b), and **in that** an open first switchable contact element (6a, 7a) and an open second switchable contact element (6b, 7b) generate an "OFF" signal (19a) as a control signal, a closed first switchable contact element (6a, 7a) and an open second switchable contact element (6b, 7b) generate a "HALF" signal (19a) as a control signal in the form of the onward transmission of one of the half-waves of the AC voltage signal (21) to the signal line (4), and a closed first switchable contact element (6a, 7a) and a closed second switchable contact element (6b, 7b) generate an "ON" signal (19a) as a control signal in the form of the onward transmission of a full AC voltage signal (21) to the signal line (4), and the electric motor takes the form of an asynchronous three-phase pole-changing motor (3).

2. Interface circuit according to claim 1, **characterised in that** an encoding diode (10) has associated with it a first control switch (6) for the anticlockwise rotation function, having a first switchable contact element (6a), a second control switch (7) for the clockwise rotation function, having a first switchable contact element (7a), and the first control switch (6) and the second have associated with them a common, sequentially closing, switchable contact element (6b, 7b) for the high speed function, and the first switchable contact element (6a) is associated with a first core (4a) of the signal line (4) and the second switchable contact element (6a) is associated with a second core (4a) of the signal line (4).

3. Interface circuit according to claim 1 or 2, **characterised in that** the first and second switchable contact elements (6a, 7a, 6b, 7b) have an EMERGENCY STOP switch (8) connected upstream of them.

4. Circuit arrangement for operating a motor control system (2) for an electric motor, and in particular for an asynchronous three-phase pole-changing motor of a hoisting unit, having a controlling switching element which has an interface circuit according to one of claims 1 to 3 and which is connected via a signal line to the motor control system (2) for the electric motor, **characterised in that** the motor control system (2) is divided into a motor switch (2b) and a signal decoder (2b), the motor switch (2b) is connected to the electric motor (3) for the operation thereof, and the signal decoder (2b) processes the signals (19a, 19b and 19c) which arrive via the signal line (4) from the interface circuit (20) in order to transmit them onward to the motor switch (2a).

## Revendications

1. Circuit d'interface pour commander un dispositif de commande (2) d'un moteur électrique, en particulier d'un moteur asynchrone triphasé à commutation de polarité d'un engin de levage, comprenant un premier élément de contact commutable (6a, 7a) associé à une ligne de signal (4), véhiculant un signal de tension alternative, et destiné à générer au moins deux signaux de commande distincts, une diode de codage (10) étant montée en série en amont ou en aval du premier élément de contact commutable (6a, 7a) dans la ligne de signal (4), **caractérisé en ce qu'**un second élément de contact commutable supplémentaire (6b, 7b) est disposé en parallèle avec la diode de codage (2) de sorte que trois signaux de commande distincts (19a, 19b, 19c) peuvent être générés en fonction des positions du premier élément de contact commutable (6a, 7a) et du second élément de contact commutable (6b, 7b), qu'un premier élément de contact commutable (6a, 7a) ouvert et un second élément de contact commutable (6b, 7b) ouvert génèrent comme signal de commande un signal « OUVERT » (19a), un premier élément de contact commutable (6a, 7a) fermé et un second élément de contact commutable (6b, 7b) ouvert commutable génèrent comme signal de commande un signal « MOITIÉ » (19a) sous la forme de la transmission d'une demi-onde du signal de tension alternative (21) sur la ligne de signal (4) ainsi qu'un premier élément de contact commutable (6a, 7a) fermé et un second élément de contact commutable (6b, 7b) fermé génèrent comme signal de commande un signal « FERMÉ » (19a) sous la forme de la transmission d'un signal de tension alternative (21) complet sur la ligne de signal (4) et le moteur électrique est configuré en moteur asynchrone triphasé à commutation de polarité (3).

2. Circuit d'interface selon la revendication 1, **caractérisé en ce qu'**un premier bouton (6), destiné à la fonction marche à gauche et comportant un premier élément de contact commutable (6a), et un second bouton (7), destiné à la fonction marche à droite et comportant un premier élément de contact commutable (7a), sont associés à une diode de codage (10) ainsi qu'un élément de contact à fermeture séquentielle commutable (6b, 7b) destiné à la fonction marche rapide est associé au premier bouton (6) et au second bouton et le premier élément de contact commutable (6a) est associé à un premier fil (4a) de la ligne de signal (4) et le second élément de contact commutable (6a) est associé à un second fil (4a) de la ligne de signal (4).

3. Circuit d'interface selon la revendication 1 ou 2, **caractérisé en ce qu'**un commutateur ARRÊT D'URGENCE (8) est monté en amont des premier et second éléments de contact commutables (6a, 7a, 6b, 7b).

4. Agencement de circuit destiné à commander un dispositif de commande (2) d'un moteur électrique, en particulier d'un courant asynchrone triphasé à commutation de polarité d'un engin de levage, comprenant un élément de commutation de commande qui comporte un circuit d'interface selon l'une des revendications 1 à 3 et qui est relié par le biais d'une ligne de signal au dispositif de commande (2) du moteur électrique, **caractérisé en ce que** le dispositif de commande (2) est divisé en un commutateur de moteur (2b) et un décodeur de signal (2b), **en ce que** le commutateur de moteur (2b) est relié au moteur électrique (3) pour commander celui-ci, et le décodeur de signal (2b) prépare les signaux (19a, 19b et 19c), qui arrivent du circuit d'interface (20) via la ligne de signal (4), pour les transmettre au commutateur de moteur (2a).
